# EUROPÄISCHE PATENTSCHRIFT

(11) **EP 3 447 333 B1**
(45) Veröffentlichungstag und Bekanntmachung des Hinweises auf die Patenterteilung: **26.08.2020**
(21) Anmeldenummer: 18190207.3
(22) Anmeldetag: 22.08.2018
(51) Int. Cl.: F16H 19/04, E05F 15/00, F16H 57/021

(54) **GETRIEBEVORRICHTUNG ZUR ANBRINGUNG AN EINE ANTRIEBSWELLE**
TRANSMISSION DEVICE FOR ATTACHING TO A DRIVE SHAFT
DISPOSITIF DE TRANSMISSION DESTINÉ AU MONTAGE SUR UN ARBRE D'ENTRAÎNEMENT

(30) Priorität: 23.08.2017 DE 102017119237
(43) Veröffentlichungstag der Anmeldung: 27.02.2019
(73) Patentinhaber: Lock Antriebstechnik GmbH, 88521 Ertingen (DE)
(72) Erfinder: Baur, Marius, 88524 Oberwachingen (DE); Bausch, Manfred, 88527 Unlingen (DE); Fluhr, Berthold, 88521 Ertingen (DE)
(74) Vertreter: Otten, Roth, Dobler & Partner mbB Patentanwälte

(56) Entgegenhaltungen:
- EP-A1- 0 121 062
- EP-A1- 0 764 754
- EP-A1- 0 881 409

## Beschreibung

Die Erfindung betrifft eine Getriebevorrichtungsanbringung zur Anbringung an eine Antriebswelle nach dem Anspruch 1.

### Stand der Technik

Getriebevorrichtungen der einleitend bezeichneten Art sind in vielfältiger Ausführungsform z.B. aus der EP 0 764 754 A1 oder der EP 0 121 062 A1 bereits bekannt.

Beispielsweise werden Zahnstangengetriebe eingesetzt, um in Gewächshäusern Glasflügel, die mit einem Ende der Zahnstange verbunden sind, in unterschiedliche Schwenkpositionen zu bewegen, insbesondere in eine geschlossene Position und eine vollständig geöffnete Position.

Häufig sind eine ganze Reihe von Zahnstangengetriebe, auf einer Antriebswelle angeordnet, um damit eine Vielzahl von Glasflügel betätigen zu können, die jeweils mit einem Ende einer jeweiligen Zahnstange des Zahnstangengetriebes in Verbindung stehen.

### Aufgabe und Vorteile der Erfindung

Der Erfindung liegt die Aufgabe zugrunde, eine Getriebevorrichtung der einleitend bezeichneten Art in einer Weise auszugestalten, dass vielfältige, insbesondere verbesserte Einsatz- und Montagemöglichkeiten bestehen.

Diese Aufgabe wird durch die Merkmale des Anspruchs 1 gelöst.

In den abhängigen Ansprüchen sind vorteilhafte und zweckmäßige Weiterbildungen der Erfindung angegeben.

Die Erfindung geht von einer Getriebevorrichtung zur Anbringung an eine Antriebswelle aus, wobei die Getriebevorrichtung einen einstückigen Grundkörper, ein Ritzel und eine Zahnstange aufweist, wobei im angeordneten Zustand an der Antriebswelle der einstückige Grundkörper die Antriebswelle zumindest teilweise umschließt, wobei das Ritzel im montierten Zustand am Grundkörper und auf der Antriebswelle angeordnet ist, wobei die Zahnstange mit dem Ritzel zusammenwirkt und durch den Grundkörper verläuft, wobei das Ritzel und die Zahnstange am Grundkörper beweglich gelagert sind.

Das Ritzel ist beispielsweise zweiteilig ausgebildet, insbesondere mehrteilige, sodass eine Montage des Ritzels an der Antriebswelle ermöglicht ist, bei welcher sich die Teile des Ritzels durch eine in Bezug zur Antriebswelle axialen oder radialen Bewegung zusammenfügen lassen.

Erfindungsgemäß umfasst die Getriebevorrichtung ein Gehäuse, wobei das Gehäuse ein Anbindungsorgan zur Montage der Getriebevorrichtung an eine Gebäudestruktur aufweist und wobei unabhängig von einer Anordnung der Getriebevorrichtung an der Antriebswelle der Grundkörper am Gehäuse drehbeweglich gelagert ist.

Durch diese Maßnahme ist eine verbesserte Anbringung, insbesondere eine verbesserte Lagerung der Getriebevorrichtung an der Gebäudestruktur realisiert. Vorteilhafterweise ist hierdurch eine Montage der Getriebevorrichtung an der Gebäudestruktur und an der Antriebswelle vereinfacht. Vorteilhafterweise ist der Grundkörper unmittelbar bzw. direkt am Gehäuse drehbeweglich gelagert. Vorteilhafterweise greift ein Teil des Grundkörpers in das Gehäuse ein, insbesondere in und/oder an ein entsprechendes Gegenstück des Gehäuses. Denkbar ist auch, dass ein Teil des Gehäuses in den Grundkörper eingreift, beispielsweise in und/oder an ein entsprechendes Gegenelement des Grundkörpers. Bevorzugterweise ist der Grundkörper derart einseitig offen, dass es sich auf die Antriebswelle in radialer Richtung aufschieben lässt. Der Grundkörper besteht beispielsweise aus Kunststoff, z.B. aus Delrin. Vorteilhafterweise ist der Grundkörper an das Gehäuse vor einer Anbringung an die Antriebswelle montierbar vorhanden, sodass der Grundkörper zusammen mit dem Gehäuse an der Antriebswelle anbringbar ist.

Das Gehäuse ist z.B. aus Metall, aus Kunststoff und/oder einem Verbundwerkstoff hergestellt.

Von Vorteil erweist sich auch, dass das Gehäuse plattenartig ausgebildet ist. Hierdurch ist das Gehäuse vergleichsweise günstig ausgestaltet. Beispielsweise ist das Gehäuse zweiteilig vorhanden. Das Gehäuse umfasst beispielsweise zwei Führungsplatten. Das Gehäuse und/oder die Führungsplatten sind z.B. als ein Stanzteil vorhanden oder aus einem Blech ausgeschnitten, z.B. gelasert oder wasserstrahlgeschnitten. Denkbar ist allerdings auch, dass das Gehäuse einteilig bzw. einstückig vorhanden ist.

Außerdem wird vorgeschlagen, dass das Gehäuse an einer Außenseite des Grundkörpers angeordnet ist. Z.B. ist der Grundkörper mit der Außenseite des Grundkörpers am Gehäuse angeordnet, insbesondere an einer Innenseite des Gehäuses. Das Gehäuse umschließt den Grundkörper im angeordneten Zustand vorteilhafterweise. Beispielsweise ist der Grundkörper zwischen den Führungsplatten des Gehäuses anordenbar. Erfindungsgemäß weist der Grundkörper ein Führungselement auf und das Gehäuse ein Führungsorgan und das Führungselement und das Führungsorgan sind derart aufeinander abgestimmt, dass der Grundkörper am Gehäuse drehbeweglich gelagert ist.

Vorteilhafterweise ist das Führungselement oder das Führungsorgan als eine Kulisse ausgebildet. Beispielsweise ist der Grundkörper relativ zum Gehäuse begrenzt schwenkbar oder begrenzt drehbeweglich vorhanden. Beispielsweise sind das Führungselement und das Führungsorgan derart aufeinander abgestimmt bzw. ausgebildet, dass der Grundkörper relativ zum Gehäuse um einen definierten Winkelbereich schwenkbeweglich gelagert ist. Der Winkelbereich ist z.B. zwischen 0° und 270°, zwischen 0° und 180° oder zwischen 0 und 90° festgelegt.

Auch ist es vorteilhaft, dass das Führungsorgan und/oder das Führungselement abschnittsweise gekrümmt, insbesondere kreisförmig ausgestaltet ist. Denkbar ist allerdings auch, dass das Führungsorgan und/oder das Führungselement ringartig oder kreisförmig vorhanden sind. Hierdurch ist der Grundkörper am Gehäuse drehbeweglich lagerbar.

In einer vorteilhaften Variante der Erfindung ist der Grundkörper zwischen zwei Teilen des Gehäuses, z.B. zwischen zwei Führungsplatten drehbeweglich gelagert. Beispielsweise umschließt das Gehäuse den Grundkörper an zwei Seiten, insbesondere an genau zwei Seiten, vorteilhafterweise an zwei sich gegenüberliegend vorhandenen Seiten. Das Gehäuse ist z.B. mehrteilig, insbesondere zweiteilig ausgebildet, insbesondere zusammengesetzt. Hierdurch ist eine Montage des Grundkörpers am Gehäuse vereinfacht und/oder eine Montage der Getriebevorrichtung an einer montierten Antriebwelle.

Weiter wird vorgeschlagen, dass das Gehäuse mindestens zwei Anbindungsorgane zur Montage der Getriebevorrichtung an die Gebäudestruktur aufweist. Das Gehäuse ist beispielsweise mit der Gebäudestruktur fest verbindbar. Z.B. ist das Gehäuse an oder mit den Anbindungsorganen an die Gebäudestruktur anschraubbar. Denkbar ist auch, dass das Gehäuse an die Gebäudestruktur im angeordneten Zustand im Bereich der Anbindungsorgane genietet oder geschweißt ist. Die Anbindungsorgane sind beispielsweise am Gehäuse abstehend vorhanden.

Außerdem ist es von Vorteil, dass das Gehäuse in einer Weise ausgebildet ist, dass das Gehäuse in einer radialen Richtung auf die Antriebswelle und/oder den Grundkörper aufschiebbar ist. Beispielsweise ist das Gehäuse senkrecht zu einer Rotationsachse der Antriebswelle auf die Antriebswelle aufschiebbar ausgebildet. Insbesondere ist das Gehäuse in einer Weise vorhanden, sodass es auf eine montierte Antriebswelle und an einen an die Antriebswelle angeordneten Grundkörper aufschiebbar vorhanden ist.

Von Vorteil erweist sich auch, dass eine Hülse vorhanden ist, wobei die Hülse beweglich am Grundkörper gelagert ist und wobei die Hülse mit der Antriebswelle verbindbar ist. Das Ritzel ist z.B. auf die Hülse aufschiebbar. Das Ritzel ist bevorzugterweise drehfest und/oder unbeweglich auf und/oder mit der Hülse befestigt. Beispielsweise sind das Ritzel und die Hülse einstückig vorhanden. Z.B. ist die Hülse Teil des Ritzels.

Vorteilhafterweise ist die Hülse in axialer Richtung auf die Antriebswelle aufschiebbar, wobei die Hülse die Antriebswelle im montierten Zustand umschließt. Vorteilhafterweise umschließt die Hülse im montierten Zustand der Getriebevorrichtung die Antriebswelle. Beispielsweise umschließt die Hülse entlang eines Umfangs der Antriebwelle die Antriebswelle, insbesondere vollständig.

### Beschreibung der Ausführungsbeispiele

Mehrere Ausführungsbeispiele werden anhand der nachstehenden schematischen Zeichnungen unter Angabe weiterer Einzelheiten und Vorteile näher erläutert.

Es zeigen:
- Figur 1: eine erfindungsgemäße Getriebevorrichtung in einer perspektivischen Ansicht,
- Figur 2: eine weitere Variante einer Getriebevorrichtung in einer perspektivischen Ansicht und
- Figur 3: in einer weiteren perspektivischen Ansicht eine Explosionsdarstellung der Getriebevorrichtung nach Figur 2.

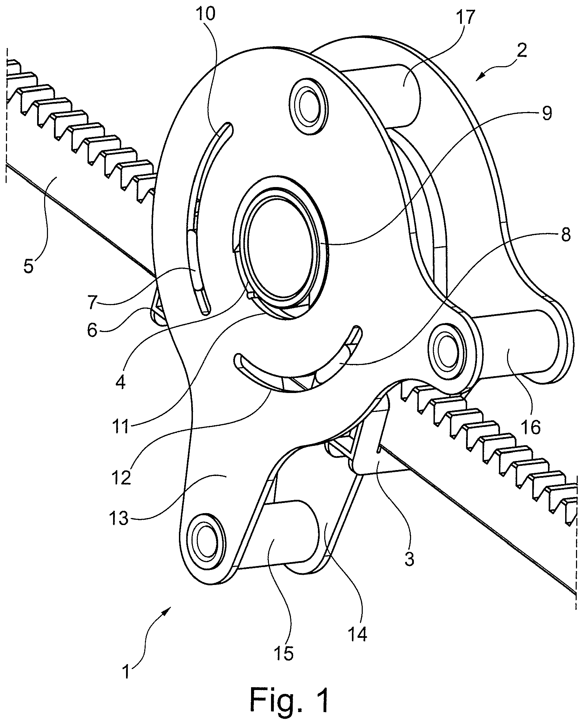

Figur 1 zeigt eine erfindungsgemäße Getriebevorrichtung 1. Die Getriebevorrichtung 1 umfasst ein Gehäuse 2, einen Grundkörper 3, ein Ritzel 4 und eine Zahnstange 5.

Das Ritzel 4 ist z.B. drehbeweglich am Grundkörper 3 gelagert. Der Grundkörper 3 besitzt an seinen Außenseiten 6 Führungselemente 7 - 9 mittels welchen der Grundkörper 3 schwenkbeweglich, insbesondere drehbeweglich am Gehäuse 2 gelagert ist. Die Führungselemente 7 - 9 sind beispielsweise als von der Außenseite 6 abstehende nasenartige Elemente vorhanden. Beispielsweise sind die Führungselemente 7 - 9 gekrümmt, zum Beispiel kreisförmig gekrümmt ausgebildet. Im angeordneten Zustand der Getriebevorrichtung 1 greifen die Führungselemente 7 - 9 beispielsweise in Führungsorgane 10 - 12 des Gehäuses 2 ein. Beispielsweise werden die Führungselemente 7 - 9 im angeordneten Zustand durch die Führungsorgane 10 - 12 geführt. Die Führungsorgane 10 - 12 sind beispielsweise als kreisförmige, z.B. ringartige Einkerbung oder Ausnehmungen am Gehäuse 2 vorhanden. Durch die Lagerung des Grundkörpers 3 am Gehäuse 2 über die Führungselemente 7 - 9 an den Führungsorganen 10 - 12 ist der Grundkörper 3 am Gehäuse 2 schwenkbeweglich gelagert. Vorteilhafterweise ist der Grundkörper 3 ausschließlich mittels der Führungselemente 7 - 9 am Gehäuse 2 gelagert.

Das Gehäuse 2 umfasst vorteilhafterweise zwei plattenartige Seitenelemente 13, 14, zwischen welchen der Grundkörper 3 angeordnet ist. Die Seitenelemente 13, 14 sind mit insbesondere drei Abstandshalter 15 - 17 voneinander beabstandet verbunden, sodass der Grundkörper 3 schwenkbeweglich am Gehäuse 2 gelagert ist. An den Seitenelemente 13, 14 sind die Führungsorgane 10 - 12 als ausgeschnittene bzw. ausgelaserte Bereiche vorhanden.

Eine Anbringung der Getriebevorrichtung 1 an einer Antriebswelle erfolgt durch Aufstecken oder Aufschieben der Getriebevorrichtung 1 auf die Antriebswelle in axialer Richtung, sodass das Ritzel 4 die Antriebswelle umfänglich umschließt. Das Ritzel 4 ist z.B. schwenkbeweglich, insbesondere drehbeweglich am Grundkörper 3 gelagert.

Die Abstandshalter 15 - 17 des Gehäuses 2 können dazu ausgebildet sein, die Getriebevorrichtung 1 an einem Gebäude bzw. an einer Gebäudestruktur des Gebäudes zu befestigen.

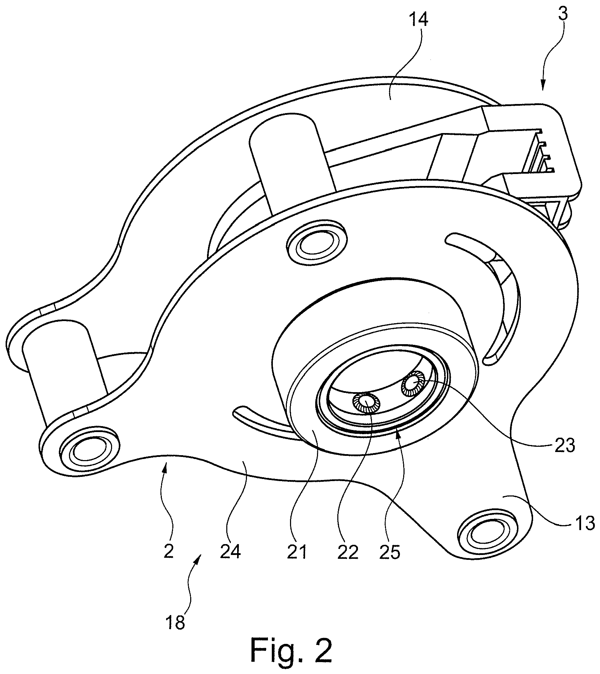

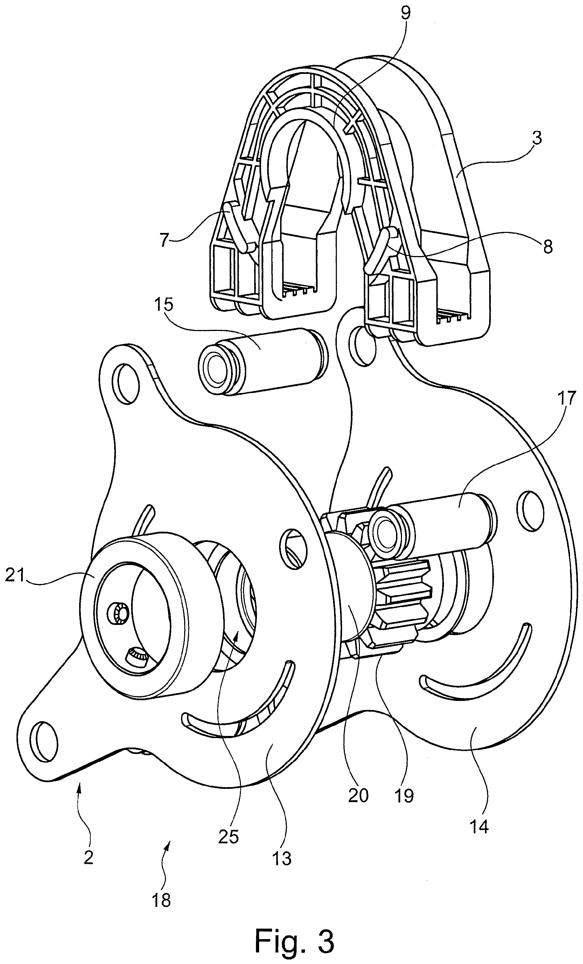

Die Figuren 2, 3 zeigen eine alternative Getriebevorrichtung 18. Die Getriebevorrichtung 18 unterscheidet sich von der Ausbildung der Getriebevorrichtung 1 der Figur 1 vorteilhafterweise ausschließlich in der Ausgestaltung des Ritzels, weshalb für alle weiteren Komponenten der Getriebevorrichtung 18 die gleichen Bezugszeichen wie für die Getriebevorrichtung 1 verwendet werden.

Das Ritzel 19 der Getriebevorrichtung 18 umfasst eine Hülse 20, welche die Seitenelemente 13, 14 des Gehäuses 2 im montierten Zustand durchgreifen. Im angeordneten Zustand der Getriebevorrichtung 18 an der Antriebswelle ist die Getriebevorrichtung 18 mit der Hülse 20 bzw. mit dem Ritzel 19 auf die Antriebswelle aufgeschoben vorhanden. Vorteilhafterweise steht ein Ende 25 der Hülse 20 im angeordneten Zustand am Gehäuse 2 über eine Außenseite 24 des Gehäuses über bzw. von einer Außenseite 24 ab. Mittels einem Befestigungsring 21 ist die Getriebevorrichtung 18 im angeordneten Zustand auf der Antriebswelle durch Madenschrauben 22, 23 über die Hülse 20 mit der Antriebswelle insbesondere drehfest verbindbar. Der Befestigungsring 21 umschließt die Hülse 20 im angeordneten Zustand an der Antriebswelle vorteilhafterweise umfänglich, insbesondere im Bereich des Endes 25 der Hülse 20. Beispielsweise wird der Befestigungsring 21 zusammen mit der Getriebevorrichtung 18 auf die Antriebswelle aufgeschoben. Denkbar ist aber auch, dass der Befestigungsring 21 vor oder nach dem Anbringen der Getriebevorrichtung 18 an der Antriebswelle auf die Antriebswelle aufgeschoben wird. Im montierten Zustand der Getriebevorrichtung 18 ist der Befestigungsring 21 an einer Außenseite 24 des Gehäuses 2 im Bereich des Endes 25 der Hülse 20 vorhanden. Hierdurch ist eine insbesondere drehfeste Befestigung der Getriebevorrichtung 18, insbesondere des Ritzels 19 an der Antriebswelle erleichtert.

### Bezugszeichenliste

- 1: Getriebevorrichtung
- 2: Gehäuse
- 3: Grundkörper
- 4: Ritzel
- 5: Zahnstange
- 6: Außenseite
- 7 - 9: Führungselement
- 10 - 12: Führungsorgan
- 13, 14: Seitenelemente
- 15 - 17: Abstandshalter
- 18: Getriebevorrichtung
- 19: Ritzel
- 20: Hülse
- 21: Befestigungsring
- 22, 23: Madenschraube
- 24: Außenseite
- 25: Ende

## Patentansprüche

1. Getriebevorrichtung (1, 18) zur Anbringung an eine Antriebswelle, wobei die Getriebevorrichtung (1, 18) einen einstückigen Grundkörper (3), ein Ritzel (4, 19) und eine Zahnstange (5) aufweist, wobei im angeordneten Zustand an der Antriebswelle der einstückige Grundkörper (3) die Antriebswelle zumindest teilweise umschließt, wobei das Ritzel (4, 19) im montierten Zustand am Grundkörper (3) und auf der Antriebswelle angeordnet ist, wobei die Zahnstange (5) mit dem Ritzel (4, 19) zusammenwirkt und durch den Grundkörper (3) verläuft, wobei das Ritzel (4, 19) und die Zahnstange (5) am Grundkörper (3) beweglich gelagert sind, wobei die Getriebevorrichtung (1, 18) ein Gehäuse (2) umfasst, wobei das Gehäuse (2) ein Anbindungsorgan (15 - 17) zur Montage der Getriebevorrichtung (1, 18) an eine Gebäudestruktur aufweist und wobei unabhängig von einer Anordnung der Getriebevorrichtung (1, 18) an der Antriebswelle der Grundkörper (3) am Gehäuse (2) drehbeweglich gelagert ist, **dadurch gekennzeichnet, dass** der Grundkörper (3) ein Führungselement (7 - 9) aufweist und das Gehäuse (2) ein Führungsorgan (10 - 12) und wobei das Führungselement (7 - 9) und das Führungsorgan (10 - 12) derart aufeinander abgestimmt sind, dass der Grundkörper (3) am Gehäuse (2) drehbeweglich gelagert ist.

2. Getriebevorrichtung (1, 18) zur Anbringung an einer Antriebswelle nach dem vorangegangenen Anspruch 1, **dadurch gekennzeichnet, dass** das Gehäuse (2) plattenartig ausgebildet ist.

3. Getriebevorrichtung (1, 18) zur Anbringung an einer Antriebswelle nach einem der vorangegangenen Ansprüche, **dadurch gekennzeichnet, dass** das Gehäuse (2) an einer Außenseite (6) des Grundkörpers (3) angeordnet ist.

4. Getriebevorrichtung (1, 18) zur Anbringung an einer Antriebswelle nach einem der vorangegangenen Ansprüche, **dadurch gekennzeichnet, dass** das Führungsorgan (10 - 12) und/oder das Führungselement (7 - 9) abschnittsweise gekrümmt, insbesondere kreisförmig ausgestaltet ist.

5. Getriebevorrichtung (1, 18) zur Anbringung an einer Antriebswelle nach einem der vorangegangenen Ansprüche, **dadurch gekennzeichnet, dass** der Grundkörper (3) zwischen zwei Teilen (13, 14) des Gehäuses (2) drehbeweglich gelagert ist.

6. Getriebevorrichtung (1, 18) zur Anbringung an einer Antriebswelle nach einem der vorangegangenen Ansprüche, **dadurch gekennzeichnet, dass** das Gehäuse (2) mindestens zwei Anbindungsorgane (15 - 17) zur Montage der Getriebevorrichtung (1, 18) an die Gebäudestruktur aufweist.

7. Getriebevorrichtung (1, 18) zur Anbringung an einer Antriebswelle nach einem der vorangegangenen Ansprüche, **dadurch gekennzeichnet, dass** eine Hülse (20) vorhanden ist, wobei die Hülse (20) beweglich am Grundkörper (3) gelagert ist und wobei die Hülse (20) mit der Antriebswelle verbindbar ist.

8. Getriebevorrichtung (1, 18) zur Anbringung an einer Antriebswelle nach dem vorangegangenen Anspruch 7, **dadurch gekennzeichnet, dass** die Hülse (20) in axialer Richtung auf die Antriebswelle aufschiebbar ist und die Hülse (20) die Antriebswelle im montierten Zustand umschließt.

## Claims

1. Transmission device (1, 18) for attaching to a drive shaft, wherein the transmission device (1, 18) has a one-piece base body (3), a pinion (4, 19) and a rack (5), wherein in the arranged state on the drive shaft the one-piece base body (3) surrounds the drive shaft at least partly, wherein the pinion (4, 19) is arranged in the mounted state on the base body (3) and on the drive shaft, wherein the rack (5) cooperates with the pinion (4, 19) and runs through the base body (3), wherein the pinion (4, 19) and the rack (5) are mounted to be movable on the base body (3), wherein the transmission device (1, 18) comprises a housing (2), wherein the housing (2) has a connecting member (15 - 17) for mounting the transmission device (1, 18) on a building structure, and wherein independently of an arrangement of the transmission device (1, 18) on the drive shaft the base body (3) is mounted rotatably on the housing (2), **characterised in that** the base body (3) has a guiding element (7 - 9) and the housing a guiding member (10 - 12) and wherein the guiding element (7 - 9) and the guiding member (10 - 12) are coordinated with one another such that the base body (3) is mounted rotatably on the housing (2).

2. Transmission device (1, 18) for attaching to a drive shaft according to the preceding claim 1, **characterised in that** the housing (2) is designed to be plate-like.

3. Transmission device (1, 18) for attaching to a drive shaft according to any of the preceding claims, **characterised in that** the housing (2) is arranged on an outside (6) of the base body (3).

4. Transmission device (1, 18) for attaching to a drive shaft according to any of the preceding claims, **characterised in that** the guiding member (10 - 12) and/or the guiding element (7 - 9) is designed to be curved in sections, in particular circular.

5. Transmission device (1, 18) for attaching to a drive shaft according to any of the preceding claims, **characterised in that** the base body (3) is mounted rotatably between two parts (13, 14) of the housing (2).

6. Transmission device (1, 18) for attaching to a drive shaft according to any of the preceding claims, **characterised in that** the housing (2) has at least two connecting members (15 -17) for mounting the transmission device (1, 18) on the building structure.

7. Transmission device (1, 18) for attaching to a drive shaft according to any of the preceding claims, **characterised in that** a sleeve (20) is provided, wherein the sleeve (20) is mounted movably on the base body (3) and wherein the sleeve (20) can be connected to the drive shaft.

8. Transmission device (1, 18) for attaching to a drive shaft according to the preceding claim 7, **characterised in that** the sleeve (20) can be pushed in axial direction onto the drive shaft and the sleeve (20) surrounds the drive shaft in the mounted state.

## Revendications

1. Dispositif de transmission (1, 18) destiné à être monté sur un arbre d'entraînement, le dispositif de transmission (1, 18) étant muni d'un corps de base (3) d'un seul tenant, d'un pignon (4, 19) et d'une crémaillère (5), le corps de base (3) d'un seul tenant, lorsqu'il est monté sur l'arbre d'entraînement, entourant au moins partiellement l'arbre d'entraînement, le pignon (4, 19) étant disposé, à l'état monté, sur le corps de base (3) et sur l'arbre d'entraînement, la crémaillère (5) coopérant avec le pignon (4, 19) et s'étendant à travers le corps de base (3), le pignon (4, 19) et la crémaillère (5) étant logés mobiles sur le corps de base (3), le dispositif de transmission (1, 18) comprenant un boîtier (2), le boîtier (2) étant muni d'un élément de raccordement (15-17) pour le montage du dispositif de transmission (1, 18) sur une structure de bâtiment, et le corps de base (3) étant logé rotatif sur le boîtier (2) indépendamment d'une disposition du dispositif de transmission (1, 18) sur l'arbre d'entraînement, **caractérisé en ce que** le corps de base (3) est muni d'un élément de guidage (7 - 9) et le boîtier (2) d'un organe de guidage (10 - 12) et **en ce que** l'élément de guidage (7 - 9) et l'organe de guidage (10 - 12) sont adaptés l'un à l'autre de telle sorte que le corps de base (3) soit logé rotatif sur le boîtier (2).

2. Dispositif de transmission (1, 18) destiné à être monté sur un arbre d'entraînement selon la revendication 1 précédente, **caractérisé en ce que** le boîtier (2) est conçu en forme de plaque.

3. Dispositif de transmission (1, 18) destiné à être monté sur un arbre d'entraînement selon l'une des revendications précédentes, **caractérisé en ce que** le boîtier (2) est disposé sur une face extérieure (6) du corps de base (3).

4. Dispositif de transmission (1, 18) destiné à être monté sur un arbre d'entraînement selon l'une des revendications précédentes, **caractérisé en ce que** l'organe de guidage (10 - 12) et/ou l'élément de guidage (7 - 9) sont cintrés par sections, en particulier de façon circulaire.

5. Dispositif de transmission (1, 18) destiné à être monté sur un arbre d'entraînement selon l'une des revendications précédentes, **caractérisé en ce que** le corps de base (3) est logé rotatif entre deux parties (13, 14) du boîtier (2).

6. Dispositif de transmission (1, 18) destiné à être monté sur un arbre d'entraînement selon l'une des revendications précédentes, **caractérisé en ce que** le boîtier (2) est muni d'au moins deux éléments de raccordement (15 - 17) pour le montage du dispositif de transmission (1, 18) sur la structure de bâtiment.

7. Dispositif de transmission (1, 18) destiné à être monté sur un arbre d'entraînement selon l'une des revendications précédentes, **caractérisé en ce qu'**il est prévu un manchon (20), lequel manchon (20) est logé mobile sur le corps de base (3), et le manchon (20) peut être relié à l'arbre d'entraînement.

8. Dispositif de transmission (1, 18) destiné à être monté sur un arbre d'entraînement selon la revendication 7 précédente, **caractérisé en ce que** le manchon (20) peut être enfilé sur l'arbre d'entraînement en direction axiale, et le manchon (20) entoure l'arbre d'entraînement à l'état monté.
